# EUROPEAN PATENT SPECIFICATION

(11) **EP 0 332 785 B1**
(45) Date of publication and mention of the grant of the patent: **05.04.1995**
(21) Application number: 88312029.7
(22) Date of filing: 19.12.1988
(51) Int. Cl.: C08K 3/32, C08L 83/04

(54) **Silicone rubber containing alkali metal salts of phosphoric acid and phosphorous acid**
Alkalimetallsalze der Phosphorsäure und der phosphorigen Säure enthaltender Silikonkautschuk
Caoutchouc silicone contenant des sels de métaux alcaline de l'acide phosphorique et de l'acide phosphoreux

(30) Priority: 24.12.1987 US 137985
(43) Date of publication of application: 20.09.1989
(73) Proprietor: DOW CORNING CORPORATION, Midland Michigan 48686-0994 (US)
(72) Inventor: Lamont, Peter, Midland Michigan (US)
(74) Representative: Lewin, John Harvey

(56) References cited:
- FR-A- 2 540 129

## Description

This invention relates to silicone rubber composition and to silicone rubber. This invention also relates to a method of improving the flame retardancy of a silicone rubber.

The silicone rubber art is filled with methods and additives which are designed to improve the properties of the silicone rubber. Many of these methods and additives are complex, expensive and difficult to use. For example in the art of making silicone rubber flame retardant, platinum compounds are added to the silicone rubber composition. Platinum is expensive even in small amounts. Because the amounts of platinum used are small, parts per million, and because it is susceptible to poisoning, care must be taken to avoid materials and environments which can poison the Platinum thus making it ineffective as a flame retardant. However, platinum alone is not enough for most applications and additional ingredients are needed to further improve the flame retardant property. These additional ingredients might be the rare earth oxides and hydroxides which are also expensive. Other additives which can be used are carbon black and fumed titanium dioxide. The carbon black, although effective in improving the flame retardant property, only allows the production of black or grayish products and many applications require transparent materials or a color other than black or gray, such as in electrical insulation for wiring. Some of the means used to improve the flame retardancy of the silicone rubber destroy the physical properties of the silicone rubber to such a great extent that the silicone rubber becomes unusable for the application for which it was designed.

It was completely unexpected that small amounts of alkali metal salts of phosphoric acid or phosphorous acid which contain hydrogen could provide valuable improvement in the properties of silicone rubber, such as flame retardancy and compression set.

FR-A-2540129 discloses rapidly hardening organopolysiloxane compositions comprising polyacryloxysilane cross-linking agents. The hardening accelerator is a mixture of an alkali or alkaline earth metal phosphate, polyphosphate or mixture thereof with water or a water donor. In contrast, the compositions according to the present invention do not include water or a water donor.

Thus, the present invention provides use of a salt selected from di-(alkali metal) hydrogen phosphate, an alkali metal dihydrogen phosphate, a di-(alkali metal) hydrogen phosphite, an alkali dihydrogen phosphite, or a mixture thereof, for improving the flame-retardant property of a silicone rubber composition.

Today silicone rubber is well known in the art and many kinds are commercially available. Silicone rubber can be derived from a composition which comprises a polydiorganosiloxane as the base polymer. The polydiorganosiloxane is the major ingredient in the composition when fillers are excluded. Fillers can often be present in amounts of greater than 50 weight percent of the total weight of the composition. Silicone rubber compositions comprise polydiorganosiloxane and some means for curing the composition such as a crosslinking catalyst. For example, the polydiorganosiloxane can be crosslinked with a heat curable means or a room temperature means. Heat curable means include organic peroxides and hydrosilation catalyzed compositions where the cure is inhibited at room temperatures and which comprise aliphatically unsaturated polydiorganosiloxanes, polysiloxanes having silicon-bonded hydrogen atoms and a hydrosilation catalyst such as a platinum catalyst.

Room temperature curable compositions include the hydrosilation catalyzed compositions which are not room temperature inhibited and compositions which comprise polydiorganosiloxanes with hydrolyzable endgroups or hydroxyl endgroups and a silane or siloxane crosslinker having hydrolyzable groups. The compositions having the hydrolyzable groups can be either single package or two package materials. Single package materials are those which are stored in a single package which protects the composition from moisture and when cure is desired the composition is extruded from the tube and allowed to contact atmospheric moisture and cure occurs. Two package materials are those which have some ingredients in one package and some ingredients in at least one other package and when cure is desired the contents of the two packages are mixed and cure occurs. Two package materials are used because the ingredients if stored in a single package would prematurely cure and thus not be useful. Many of these compositions are known to the art and many are commercially available. However, there is still a need to improve their properties, such as flame retardancy and compression set, among others.

The polydiorganosiloxanes can be prepared by many well known methods and include the triorganosiloxy endblocked polydiorganosiloxanes, the hydroxyl group endblocked polydiorganosiloxanes, those polydiorganosiloxanes which are endblocked with siloxy units having one, two or three hydrolyzable groups and mixtures of polydiorganosiloxanes such as those in which some of the polymer molecules are endblocked with hydroxyl groups and some are endblocked on one end with a hydroxyl group and the other end is endblocked with a triorganosiloxy unit. The mixtures of polydiorganosiloxanes which contain both hydroxyl endgroups and triorganosiloxy endblocking units are described in U.S. Patent No. 3,146,251, issued on August 25, 1964, to Brown et al. This Brown et al. patent shows the preparation of these polymer mixtures and to show the polydiorganosiloxanes. Brown et al. describe reacting polydiorganosiloxane cyclic trimers with hydroxylated compounds including alcohol, silanols, siloxanols using as the catalyst an organic amine. Dupree in U.S. Patent No. 3,274,145, issued September 20, 1966, teaches preparing the polydiorganosiloxane mixtures having both hydroxyl endgroups and triorganosiloxy unit endgroups from cyclic diorganosiloxanes and triorganosiloxy endblocked polydiorganosiloxane of low molecular weight using an alkali metal catalyst such as potassium hydroxide. Dupree shows the preparation of polydiorganosiloxane mixtures having both hydroxyl endgroups and triorganosiloxy endgroups and also shows room temperature curable compositions prepared from such polydiorganosiloxane mixtures acyloxysilane crosslinkers, such as methyltriacetoxysilane, and curing catalysts if necessary. The catalysts can be metal carboxylates such as tin carboxylates. The acyloxysilane crosslinked polydiorganosiloxane compositions can readily be packaged in a single package. Although it is possible to package these in two packages, such compositions are most often found available in a moisture protected single package and find utility as sealants and adhesives. Other compositions comprising polydiorganosiloxane and acyloxysilicon functional crosslinkers are disclosed in U.S. Patent No. 3,035,016, issued May 15, 1962 and U.S. Patent No. 3,077,495, issued February 12, 1963, to Bruner which show compositions curable at room temperature and which comprise polydiorganosiloxane and acyloxy silicon crosslinkers.

Sweet in U.S. Patent No. 3,189,576, issued June 15, 1965, and Johnson et al. in U.S. Patent No. 3,398,112, issued August 20, 1968 describe room temperature curable single package compositions (they use the term one-component to refer to single package) which comprise polydiorganosiloxane and ketoximo- or oximo-silicon crosslinkers. Sweet and Johnson et al. show compositions comprising polydiorganosiloxane and ketoximo-silicon crosslinkers or oximo-silicon crosslinkers.

Weyenberg in U.S. Patent No. 3,334,067, issued August 1, 1967, describes a room temperature vulcanizable single package composition which comprises a polydiorganosiloxane, a trialkoxysilane crosslinker and a beta-dicarbonyl titanium compound. Weyenberg shows the compositions comprising polydiorganosiloxane, trialkoxysilane crosslinker and titanium compound. Weyenberg is only an example of many such patents describing such compositions. Brown et al. in U.S. Patent No. 3,161,614, issued December 15, 1964 and Reissue No. 29,760, issued September 12, 1978, describe polydiorganosiloxanes having dialkoxymonoorganosiloxy endblocking units and trialkoxysiloxy endblocking units which can be used in making single package room temperature curable compositions similar to those described by Weyenberg. The Brown et al. patent and reissue show polydiorganosiloxane having alkoxy functional endblocking units and compositions prepared therefrom.

Another room temperature vulcanizing composition comprising a polydiorganosiloxane and a hydrolyzable crosslinker is described by Toporcer et al. in U.S. Patent No. 3,817,909, issued June 18, 1974, and by Klosowski in U.S. Patent No. 3,996,184, issued December 7, 1976. These patents describe compositions for single packages and for two packages. The compositions comprise hydroxyl endblocked polydiorganosiloxanes, diorganodi- (N-organoacetamido)silane and polyfunctional aminoxysilicon compound. Whether the compositions are single package compositions or two package compositions is dependent upon the amounts of the ingredients. These patents show compositions which cure at room temperature and contain acetamidosilanes and aminoxy silicon compounds. Brady et al. in U.S. Patent No. 3,766,128, issued October 16, 1973, describe similar compositions except they comprise hydroxyl endblocked polydiorganosiloxane, methylvinyldi-(N-methylacetamido)silane and monoorganotriaminosilane. Clark et al. in U.S. Patent No. 3,766,127, issued October 16, 1973, describes similar compositions except they comprise hydroxyl endblocked polydiorganosiloxane, diorganodi (N-organoacetamido)silane and monoorganotri(N-organoacetamido)silane.

Polmanteer in U.S. Patent No. 2,927 907, issued March 8, 1960, and Hyde in U.S. Patent No. 3,094,497, issued June 18, 1963 describe two package compositions which cure at room temperature and comprise when the contents of the packages are mixed, hydroxyl endblocked polydiorganosiloxane, alkoxysilanes or alkoxypolysilicates and a catalyst. These patents show two package compositions which cure at room temperature and contain alkoxy compounds. Other patents which describe compositions which cure spontaneously at room temperature are exemplified by U.S. Patent Nos. 2,833,742; 2,843,555; 2,902,467; 2,934,519; and 2,999,077.

Compositions which cure by a platinum catalyzed reaction between Si-H and Si-CH=CH₂ are described in U.S. Patent No. 2,823 218, issued February 11, 1958, to Speier et al.; in U.S. Patent No. 3,419,593, issued December 31, 1968, to Willing; and U.S. Patent No. 3,697,473, issued October 10, 1972, to Polmanteer et al. These compositions comprise polydiorganosiloxane containing aliphatic unsaturation, such as vinyl or allyl bonded to silicon atoms and usually the endblocking units are triorganosiloxy units which contain the aliphatic unsaturation, silicon compounds which contain silicon-bonded hydrogen atoms as the crosslinker and in the case of Polmanteer et al. also contains a chain extender and a platinum catalyst. Such compositions spontaneously begin to cure at room temperature when mixed, sometimes very quickly and other times at a slower rate depending upon the nature of the aliphatically unsaturated siloxane, the Si-H compound and the platinum catalyst used. To extend the pot life or shelf life of the compositions a platinum catalyst inhibitor can be used to prolong the cure time at room temperature. Such platinum catalyst inhibitors include aromatic heterocyclic nitrogen compounds, pyridazine, pyrazine, quinoline, 2,2′ -biquinoline, bipyridine, naphthyridine, quinaldine, dialkyl formamides, thioamides, alkylthioureas and ethylene thiourea as described in U.S. Patent No. 3,188,299; the organophosphorus compounds described in U.S. Patent No. 3,188,300; benzotriazole as described in U.S. Patent No. 3,192,181; the nitrile compounds described in U.S. Patent No. 3,344,111; the halocarbons described in U.S. Patent No. 3,383,356; the acetylenic compounds described in U.S. Patent No. 3,445,420, issued May 20, 1969, to Kookootsedes et al. which shows preferred platinum catalyst inhibitors of the acetylenic type; the vinylsilazanes described in U.S. Patent No. 3,453,233; the sulfoxide compounds described in U.S. Patent No. 3,453,234; and the salts described in U.S. Patent No. 3,532,649.

Platinum catalysts are well known in the art such as the list described in Polmanteer et al. Polmanteer et al., along with Kookootsedes et al., show aliphatically unsaturated polydiorganosiloxanes and Si-H containing compounds. A preferred platinum catalyst is described by Willing.

The polydiorganosiloxane can vary from a thin fluid to a non-flowing gum, having viscosities of from 0.1 to greater than 30,000 Pa.s at 25°C. The polydiorganosiloxane is composed of predominately diorganosiloxane units, however, some of the polydiorganosiloxanes can contain small amounts of monoorganosilsesquioxane units and silicon dioxide units, and in some cases the polydiorganosiloxane will have triorganosiloxy units as the endblocking groups. The organic groups bonded to the silicon atoms can be monovalent hydrocarbon radicals such as alkyl radicals, such as methyl, ethyl, propyl, hexyl and octadecyl; alkenyl radicals, such as vinyl, allyl, cyclohexenyl, hexenyl, octenyl and methallyl; cycloaliphatic hydrocarbon radicals such as cyclopentyl, cyclohexyl, tertiary butyl cyclohexyl and methylcyclohexyl; aralkyl hydrocarbon radicals, such as benzyl, beta-phenylethyl and beta-phenylpropyl; and aryl hydrocarbon radicals, such as phenyl, xenyl, tolyl, xylyl and naphthyl; halogenated hydrocarbon radicals such as chloromethyl, beta-chloropropyl, bromoxenyl, 3,3,3-trifluoropropyl, alpha,alpha,alphatrifluorotolyl, chlorophenyl, trifluorovinyl and chlorocyclohexyl; and cyanoalkyl such as beta-cyanoethyl, beta-cyanopropyl, gamma-cyanopropyl and omega-cyanooctadecyl. The preferred organic radicals bonded to the silicon atoms of the polydiorganosiloxane are methyl, phenyl, vinyl, 3,3,3-trifluoropropyl and ethyl. Preferred polydiorganosiloxanes are the polydimethylsiloxanes in which the endblocking units are either hydroxyl or dimethylvinylsiloxy groups.

The compositions of this invention comprise the polydiorganosiloxane and di- (alkali metal) hydrogen phosphate, alkali metal dihydrogen phosphate, di-(alkali metal) hydrogen phosphite, alkali metal dihydrogen phosphite and mixtures thereof. The compositions can also contain crosslinking agents, curing catalysts, fillers, plasticizers, pigments and colorants, compression set additives, flame retardant additives and heat stability additives.

The fillers can include treated and untreated fillers and reinforcing and non-reinforcing fillers if suitable for the particular composition being prepared. Fillers include reinforcing fillers such as fumed silica, precipitated silica and silica zerogels, semi-reinforcing and non-reinforcing fillers include alumina, titanium dioxide, zirconia, magnesia, zinc oxide, aluminum silicate, mica, glass, diatomaceous earth, sand, crushed quartz, carbon black, graphite and the like. The alkali metal salts of phosphoric acid or phosphorous acid which contain hydrogen include the following compounds and mixtures of such compounds, dipotassium hydrogen phosphate, potassium dihydrogen phosphate, dipotassium hydrogen phosphite, potassium dihydrogen phosphite, disodium hydrogen phosphate, sodium dihydrogen phosphate, disodium hydrogen phosphite, sodium dihydrogen phosphite and similar salts of lithium, rubidium and cesium. The preferred alkali metal salts are the mixtures of dipotassium hydrogen phosphate and potassium dihydrogen phosphate. The amount of the salt present in the compositions is small and is less than 0.1 weight percent based on the weight of the composition. Preferably the amount of the salt is less than 0.01 weight percent based on the weight of the composition.

The alkali metal salt can be added to the composition in a number of ways. The means of addition are not particularly critical except to provide the named salts as being present and well dispersed in the composition. One method is merely to add the amount of alkali metal salt to the composition being prepared. Another method is to add the salt to the polydiorganosiloxane which is then used to make the silicone curable composition. The salt may also be masterbatched by adding larger amounts of the salt to polydiorganosiloxane and/or filler of provide a concentrate which will allow a more accurate measure of the amount of salt added. The masterbatch method may be particularly useful because it allows control of the amount and also provides a source for addition to more than one kind of composition. Another method of providing compositions with the salt is to neutralize polydiorganosiloxane which has been prepared by polymerizing cyclic polydiorganosiloxanes with potassium hydroxide, sodium hydroxide, potassium silanolate, or sodium silanolate with phosphoric acid or phosphorous acid. This method is suitable but may be limited because of the difficulty in trying to regulate the amount of salt present.

The presence of the alkali metal salt improves the compression set of silicone rubber products prepared from curable compositions, particularly the compositions which are made into silicone foam. Also the flame retardancy of such compositions is improved. Other properties may also be improved. These improvements result without the loss of other essential properties, such as insulation properties and heat stability.

## Claims

1. Use of a salt selected from di-(alkali metal) hydrogen phosphate, alkali metal dihydrogen phosphate, di-(alkali metal) hydrogen phosphite, alkali metal dihydrogen phosphite and mixtures thereof for improving the flame-retardant property of a silicone rubber composition.

2. Use according to claim 1, wherein the salt is a mixture of dipotassium hydrogen phosphate and potassium dihydrogen phosphate.

3. Use according to claim 1 or 2, wherein the salt is present in an amount of less than 0.1 weight percent based on the weight of the composition.

4. Use according to claim 3, wherein the salt is present in an amount of less than 0.01 weight percent based on the weight of the composition.

5. Use according to any one of claims 1 to 4, wherein the composition further comprises a blowing agent to generate a silicone rubber foam when the silicone rubber composition is cured.

6. Use according to any one of claims 1 to 5, wherein the composition further comprises a flame retardant.

## Patentansprüche

1. Verwendung eines Salzes, ausgewählt aus Di-(alkalimetall)-hydrogenphosphaten, Alkalimetall-dihydrogenphosphaten, Di-(alkalimetall)-hydrogenphosphiten, Alkalimetalldihydrogenphosphiten und deren Gemischen, zur Verbesserung der flammwidrigen Eigenschaften von Siliconkautschukgemischen.

2. Verwendung nach Anspruch 1, wobei das Salz ein Gemisch aus Dikaliumhydrogenphosphat und Kaliumdihydrogenphosphat ist.

3. Verwendung nach Anspruch 1 oder 2, wobei das Salz in einer Menge von weniger als 0,1 Gewichtsprozent, bezogen auf das Gewicht des Siliconkautschukgemisches, zugegen ist.

4. Verwendung nach Anspruch 3, wobei das Salz in einer Menge von weniger als 0,01 Gewichtsprozent, bezogen auf das Gewicht des Siliconkautschukgemisches, zugegen ist.

5. Verwendung nach jedem der Ansprüche 1 bis 4, wobei das Gemisch weiterhin ein Treibmittel enthält, um einen Siliconschaumgummi zu erzeugen, wenn das Gemisch vernetzt wird.

6. Verwendung nach jedem der Ansprüche 1 bis 5, wobei das Gemisch weiterhin einen flammwidrigen Stoff enthält.

## Revendications

1. Utilisation d'un sel choisi parmi un hydrogénophosphate de di-(métal alcalin), un dihydrogénophosphate de métal alcalin, un hydrogénophosphite de di-(métal alcalin), un dihydrogénophosphite de métal alcalin et les mélanges de ceux-ci, pour améliorer l'ignifugation d'une composition de caoutchouc de silicone.

2. Utilisation selon la revendication 1, dans laquelle le sel est un mélange d'hydrogénophosphate de dipotassium et de dihydrogénophosphate de potassium.

3. Utilisation selon la revendication 1 ou 2, dans laquelle le sel est présent en une quantité inférieure à 0,1 % en poids sur la base du poids de la composition.

4. Utilisation selon la revendication 3, dans laquelle le sel est présent en une quantité inférieure à 0,01 % en poids sur la base du poids de la composition.

5. Utilisation selon l'une quelconque des revendications 1 à 4, dans laquelle la composition comprend en outre un agent gonflant pour produire une mousse de caoutchouc de silicone lorsque la composition de caoutchouc de silicone est durcie.

6. Utilisation selon l'une quelconque des revendications 1 à 5, dans laquelle la composition comprend en outre un agent ignifugeant.
